# FASCICULE DE BREVET EUROPEEN

(11) **EP 0 949 752 B1**
(45) Date de publication et mention de la délivrance du brevet: **18.02.2009**
(21) Numéro de dépôt: 99420089.7
(22) Date de dépôt: 06.04.1999
(51) Int. Cl.: H02M 7/00, H05K 7/20

(54) **Batterie de condensateurs, dispositif électronique de puissance comportant une telle batterie et ensemble électronique de puissance comportant un tel dispositif**
Kondensatorbank, Leistungselektronikvorrichtung mit einer solchen Kondensatorbank und Leistungselektronik-Baugruppe mit solcher Vorrichtung
Capacitor bank, power electronic device comprising such a bank and power electronic assembly comprising such device

(30) Priorité: 06.04.1998 FR 9804228
(43) Date de publication de la demande: 13.10.1999
(73) Titulaire: ALSTOM Transport SA, 75116 Paris (FR)
(72) Inventeur: Fellmann, Daniel, 69390 Millery (FR); Luscher, Patrick, 38540 Heyrieux (FR); Regnier, Bernard, Pav. 3, 38090 Villefontaine (FR); Cettour-Rose, Jacques, 65320 Borderes sur l'Echez (FR)
(74) Mandataire: Myon, Gérard Jean-Pierre

(56) Documents cités:
- WO-A-99/43190
- GB-A- 2 242 580
- US-A- 5 142 439
- PATENT ABSTRACTS OF JAPAN vol. 097, no. 009, 30 septembre 1997 (1997-09-30) & JP 09 117126 A (FUJI ELECTRIC CO LTD), 2 mai 1997 (1997-05-02)

## Description

La présente invention concerne un dispositif électronique de puissance et un ensemble électronique de puissance comportant un tel dispositif.

De manière connue, ces dispositifs de puissance sont réalisés par boulonnage de modules de puissance sur des éléments de refroidissement métalliques comprenant un volume de circulation d'un fluide caloporteur. Ces éléments de refroidissement peuvent être soumis à une circulation d'air en convection forcée ou naturelle, ou bien encore à une circulation d'eau. Ces dispositifs de puissance incluent également des condensateurs assumant une double fonction de découplage et de filtrage, qui sont rapportés au-dessus des modules de puissance.

Cet agencement connu présente cependant certains inconvénients, dans la mesure où la disposition des condensateurs au-dessus des modules de puissance a pour effet d'augmenter de manière indésirable l'épaisseur globale du dispositif de puissance une fois réalisé.

On peut également prévoir de placer les condensateurs non pas au-dessus des modules de puissance, mais sur le côté de ces derniers. Une telle conformation possède cependant une surface excessivement importante, qui est à l'origine de phénomènes d'inductances parasites préjudiciables au bon fonctionnement électrique de l'ensemble du dispositif de puissance.

Il est également connu, par US-A-5,142,439, de réaliser une batterie de condensateurs à partir de plusieurs condensateurs disposés en parallèle entre deux plaques de connexion, s'étendant sur des faces opposées de ces condensateurs. L'une de ces plaques est recouverte d'une surface isolante ainsi que d'une plaque conductrice supplémentaire, de manière à former un "bus-bar" ou barre omnibus, qui est relié à l'autre plaque de connexion par l'intermédiaire d'un conducteur de liaison. Cette batterie de condensateurs est connectée à un dispositif de puissance, les plaques conductrices de la barre omnibus étant reliées respectivement à un émetteur et à un collecteur de ce dispositif de puissance.

Cet agencement présente cependant certains inconvénients, dans la mesure ou l'utilisation de cette barre omnibus fait intervenir de nombreuses connexions, à l'origine d'inductances parasites élevées et ne permet en outre pas de réaliser un dispositif de puissance compact, du fait de la présence des connexions s'étendant au-dessus des modules de puissance.

Afin de pallier les différents inconvénients de l'art antérieur évoqués ci-dessus, l'invention a pour but de réaliser un dispositif électronique de puissance qui possède un encombrement global faible, qui soit de fabrication simple et qui permette de limiter les phénomènes d'inductances parasites.

A cet effet, l'invention a pour objet un dispositif électronique de puissance selon la revendication 1 annexée.

L'invention a également pour objet un ensemble électronique de puissance selon la revendication 12 annexée.

L'invention va être décrite ci-dessous, en référence aux dessins annexés, donnés uniquement à titre d'exemples non limitatifs et dans lesquels :
- les figures 1 et 2 sont des vues en perspective de dispositifs électroniques de puissance conformes à deux modes de réalisation de l'invention ;
- la figure 3 est une vue schématique en perspective illustrant une batterie de condensateurs susceptible d'équiper un dispositif de puissance selon l'invention ;
- les figures 4 à 6 sont des schémas de principe illustrant l'agencement de trois ensembles électroniques de puissance conformes à l'invention ; et
- les figures 7 et 8 sont des schémas électriques de principe illustrant le fonctionnement de dispositifs de puissance respectivement selon l'invention et selon l'art antérieur.

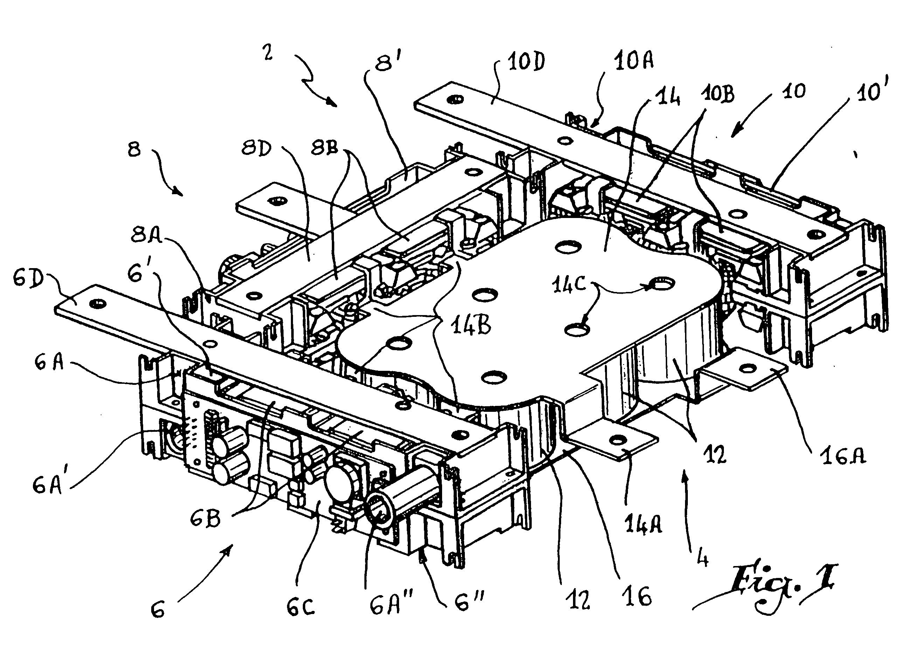

Le dispositif électronique de puissance représenté à la figure 1 est un onduleur désigné dans son ensemble par la référence 2. Cet onduleur comprend une batterie 4 de condensateurs à la périphérie de laquelle sont disposés trois sous-ensembles de l'onduleur, à savoir des phases 6, 8 et 10. Dans ce qui suit et pour plus de clarté, on supposera que l'onduleur est posé à plat.

La batterie 4 comprend plusieurs condensateurs bobinés 12 cylindriques disposés les uns à côtés des autres, reposant sur leurs extrémités planes inférieures. Ces condensateurs 12, qui sont conformes par exemple à ceux commercialisés sous la référence 97 RCF 02 par la société TPC, possèdent une ouverture traversante non représentée. Ils sont intercalés entre deux plaques 14 et 16 s'étendant au niveau de leurs extrémités planes respectivement supérieure et inférieure.

La plaque supérieure 14 est soudée au niveau de chaque extrémité supérieure des condensateurs 12, ce qui permet de relier électriquement ces derniers entre eux. Cette plaque supérieure 14 est munie d'une patte 14A destinée à être connectée avec une borne non représentée d'une alimentation électrique. La plaque supérieure 14 est en outre pourvue de plusieurs languettes 14B fixées au niveau de modules de puissance des phases 6, 8, 10, comme cela sera décrit dans ce qui suit. De manière analogue, la plaque inférieure 16 est soudée au niveau de l'extrémité inférieure de l'ensemble des condensateurs 12, et comporte une patte 16A destinée à être reliée électriquement à une autre borne d'une alimentation. Cette plaque 16 est également pourvue de languettes non représentées analogues à celles 14B équipant la plaque supérieure 14.

Chaque phase 6, 8, 10 comprend un élément de refroidissement respectif 6A, 8A, 10A, qui est tel que celui décrit dans la demande de brevet français FR 2 775 416 déposée le 23 février 1998 et sous le titre "Elément de refroidissement pour dispositif électronique de puissance et dispositif électronique de puissance comprenant un tel élément".

Ces éléments de refroidissement comprennent un volume de circulation d'eau, mis en communication respectivement avec des arrivées et des sorties d'eau, dont seules celles 6A' et 6A" de l'élément 6A ont été représentées. Chaque phase comprend en outre, sur deux faces opposées respectivement supérieure 6', 8', 10' et inférieure 6", 8" et 10", des modules de puissance, dont seuls ceux 6B, 8B et 10B disposés sur les faces supérieures ont été représentés.

La plaque 14 est pourvue d'orifices 14C ménagés dans le prolongement des ouvertures traversantes dont sont pourvues les condensateurs. La plaque 16 est également munie de tels orifices, qui n'ont pas été représentés. Ces différents orifices assurent, par coopération avec les ouvertures des condensateurs 12, le passage d'éléments de fixation, tels que par exemple des boulons et entretoises réalisés en un matériau isolant.

Chaque phase 6, 8, 10 est en outre pourvue d'allumeurs de commande des modules de puissance 6B, 8B, 10B, allumeurs dont seul celui 6C de la phase 6 a été représenté. Une barre de phase 6D, 8D et 10D s'étend en outre sur la face supérieure 6', 8', 10' de chaque phase 6, 8, 10. Ces trois barres de phases sont sensiblement coplanaires.

Ces phases 6, 8, 10 s'étendent sur trois des côtés de la batterie 4 de condensateurs, qui affecte sensiblement la forme d'un rectangle, en vue de dessus. Chacune des languettes 14B équipant la plaque supérieure 14 est reliée électriquement avec un module de puissance correspondant, disposé sur la face supérieure 6', 8', 10' des phases de l'onduleur de l'invention. De manière analogue, les languettes non représentées de la plaque inférieure 16 sont connectées aux modules de puissance disposés sur la face inférieure 6", 8", 10" des phases de l'onduleur. Ces languettes permettent donc de relier électriquement les bornes non représentées de l'alimentation avec l'ensemble des modules de puissance équipant l'onduleur conforme à l'invention.

La plaque supérieure 14 est sensiblement coplanaire avec les barres de phases 6D, 8D, 10D disposées sur les faces supérieures 6', 8' et 10' des phases de l'onduleur. De manière analogue, la plaque inférieure 16 est sensiblement co-planaire avec les faces inférieures 6", 8" et 10" de ces phases 6, 8, 10. L'onduleur 2 ainsi réalisé affecte sensiblement la forme d'un parallélépipède, ce qui lui confère donc une compacité remarquable.

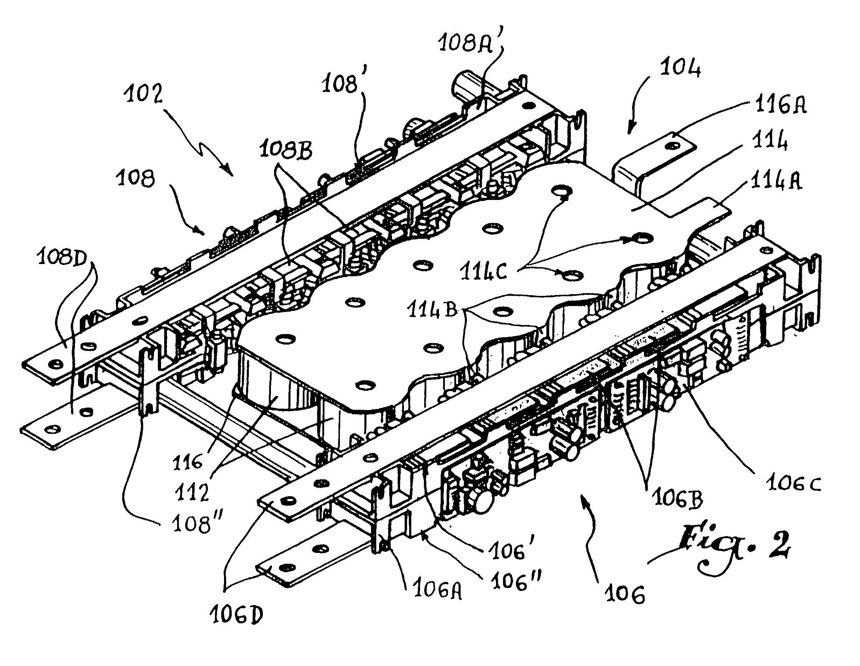

La figure 2 représente un dispositif électronique de puissance conforme à un second mode de réalisation de l'invention, qui est un onduleur désigné dans son ensemble par la référence 102. Cet onduleur comprend une batterie centrale 104 de condensateurs comportant, de manière analogue à celle 4 décrite précédemment, deux plaques respectivement supérieure 114 et inférieure 116 soudées sur les extrémités de condensateurs 112. Ces plaques sont munies de pattes 114A et 116A, de languettes dont seules celles 114B de la plaque supérieure 114 ont été représentées, et d'orifices dont seuls ceux 114C de la plaque 114 ont été représentés.

Deux sous-ensembles de l'onduleur 102, à savoir des bras 106, 108 sont disposés au voisinage des grands côtés des plaques 114 rectangulaires. Chaque bras comprend un élément de refroidissement 106A, 108A supportant des modules de puissance 106B, 108B à la fois sur leurs faces supérieures 106', 108' et sur leurs faces inférieures 106", 108". Des allumeurs, dont seuls ceux 106C du bras d'onduleur ont été représentés, sont également prévus.

Chaque bras 106, 108 est en outre muni de deux barres de phases 106D, 108D, s'étendant respectivement sur les faces supérieures 106', 108' et inférieures 106" et 108" de ces interrupteurs. De manière analogue à ce qui a été décrit pour l'onduleur 2, chaque languette des plaques supérieure 114 et inférieure 116 est reliée électriquement à un module de puissance correspondant, de manière à connecter ce dernier à une alimentation non représentée.

La plaque supérieure 114 et les barres de phases supérieures des bras 106, 108 sont sensiblement coplanaires. Il en va de même pour la plaque inférieure 116 et les barres de phases disposées sur la face inférieure de ces bras. L'onduleur ainsi formé présente donc une forme globale sensiblement parallélépipédique, ce qui lui confère une grande compacité.

Ces onduleurs 2 et 102, en particulier du fait de leur épaisseur réduite, sont à même d'être intégrés dans des planchers de véhicules électriques dits "à plancher bas".

Dans les exemples précédemment décrits et représentés, il a uniquement été fait allusion à une paire de plaques présentant, en vue de dessus, une forme sensiblement rectangulaire et entourées sur deux ou trois de leurs côtés. L'invention trouve également son application à une paire de plaques présentant un nombre de côtés quelconque, entourées sur un certain nombre de ses côtés par des sous-ensembles possédant une ou deux barres de phases.

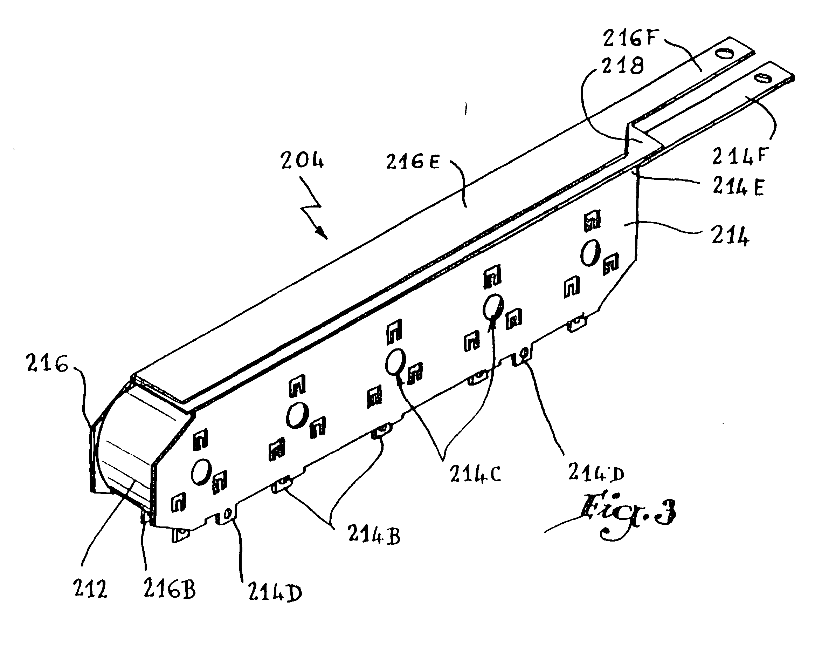

La figure 3 représente une seconde batterie de condensateurs, désignée dans son ensemble par la référence 204. Cette batterie comprend plusieurs condensateurs bobinés 212 de part et d'autre desquels sont soudés des plaques respectives appelées, par convention, supérieure 214 et inférieure 216, de manière analogue aux plaques 14, 16, 114, 116 auxquelles il a été fait allusion ci-dessus.

Chaque plaque 214, 216 comprend plusieurs languettes 214B, 216B de connexion à des modules de puissance non représentés. De plus, chaque plaque est percée d'orifices dont seuls ceux 214C ont été représentés. Ces plaques 214, 216 sont également munies d'extensions dont seules celles 214D ont été illustrées. Ces extensions assurent l'assujettissement de la batterie de condensateurs 204 sur une région électriquement isolante d'un élément de refroidissement non représenté, supportant des modules de puissance. Cette fixation permet de rapprocher la batterie de condensateurs par rapport à cet élément de refroidissement et donc de réduire le volume global du dispositif de puissance équipé d'une telle batterie, sans engendrer de problèmes électriques du fait de la nature isolante de la région choisie de l'élément de refroidissement.

Les deux plaques 214, 216 sont en outre munies de rabats respectifs 214E, 216E repliés à l'équerre à partir de l'extrémité des condensateurs 212, opposée aux languettes 214B. Ces rabats 214E, 216E se recouvrent mutuellement sur une partie substantielle de leur surface. Une feuille isolante 218, par exemple réalisée en "NOMEX" et recouverte d'un adhésif époxy, est intercalée entre ces rabats 214E, 216E et s'y trouve fixée par exemple par collage. L'ensemble formé par les rabats 214E, 216E et la feuille isolante 218 forme une barre omnibus ou "bus-bar". Cet agencement permet d'assurer l'alimentation des modules de puissance en générant une inductance suffisamment faible pour que la batterie de condensateurs 204 participe au filtrage, sans provoquer d'oscillations nuisibles au bon fonctionnement de l'ensemble. La batterie 204 assure le rôle de filtrage en complément des condensateurs extérieurs de filtrage habituels, qui ne sont pas représentés sur cette figure. Chaque rabat 214E, 216E est en outre équipé d'une patte 214F, 216F de connexion électrique à une borne non représentée d'une alimentation.

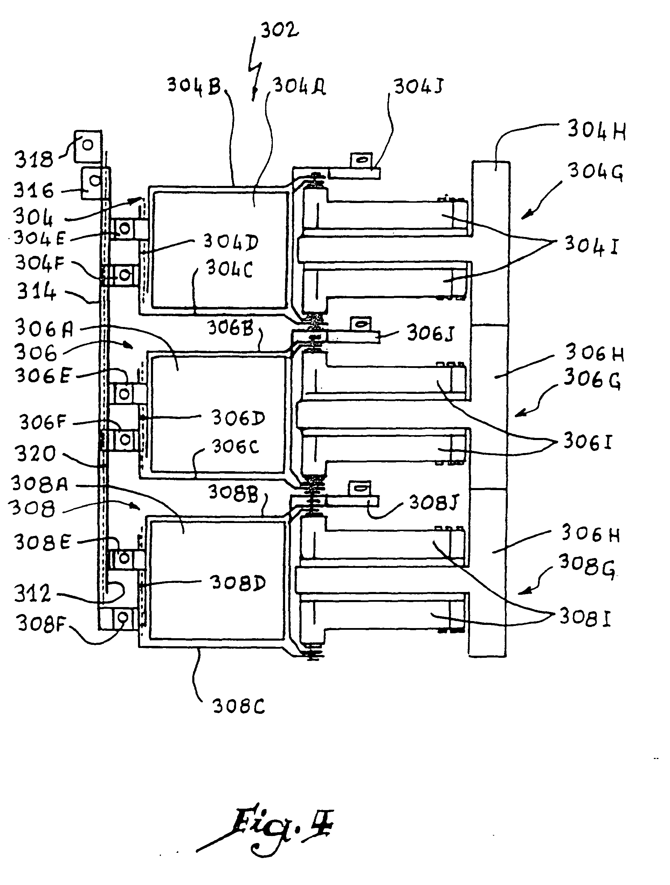

La figure 4 représente schématiquement un premier ensemble électronique de puissance conforme à l'invention, qui est un onduleur désigné dans son ensemble par la référence 302. Cet ensemble 302 comprend trois dispositifs électroniques de puissance 304, 306, 308 dont chacun inclut une batterie de condensateurs respective 304A, 306A, 308A. Chacune de ces batteries est analogue à celle 204 décrite en référence à la figure 3 et comprend des plaques 304B, 304C, 306B, 306C, 308B, 308C dont des rabats forment une barre omnibus par interposition d'une feuille isolante 304D, 306D, 308D. Chaque plaque est pourvue d'une patte respective 304E, 304F, 306E, 306F, 308E, 308F.

Les pattes 304E, 306E et 308E sont reliées entre elles par une première tige conductrice 312 connectée à une première borne d'alimentation électrique 316, alors que les pattes 304F, 306F et 308F sont reliées à une seconde tige conductrice 314 elle-même connectée à une seconde borne d'alimentation 318. Une feuille isolante 320 est interposée entre les tiges conductrices 312 et 314, de sorte que l'ensemble formé par ces tiges et cette feuille isolante forme une barre omnibus ou "bus-bar".

Chaque dispositif électronique de puissance 304, 306, 308 est équipé d'un unique sous-ensemble électronique, à savoir une phase d'onduleur 304G, 306G, 308G. Chacune de ces phases comprend, de manière connue, un élément de refroidissement 304H, 306H, 308H supportant des modules de puissance 304I, 306I, 308I qui sont connectés à une barre de phase 304J, 306J, 308J. Les éléments de refroidissement 304H, 306H, 308H sont reliés fluidiquement entre eux, de manière à pouvoir être alimentés au moyen d'une seule entrée de fluide de refroidissement.

Il est à noter que les éléments de refroidissement présentent, en coupe transversale, sensiblement une forme de T, de sorte qu'ils peuvent être empilés les uns au-dessus des autres. Cet agencement permet aux dispositifs électroniques de puissance 304, 306, 308 de pouvoir également être empilés les uns au-dessus des autres, de manière à former l'onduleur 302 conforme à l'invention. Ce dernier possède, sur cette figure 4, uniquement trois phases, mais on peut également prévoir qu'il en soit équipé de quatre, en incluant un hacheur rhéostatique, en empilant quatre dispositifs électroniques de puissance analogues à ceux 304, 306, 308 de cette figure 4. On peut également prévoir de relier électriquement entre elles les barres de phase 304J, 306J et 308J, de manière à former une seule phase globale à partir des phases originelles 304G, 306G et 308G, phase globale dont la puissance est égale à la somme des puissances des phases originelles. Une telle phase globale peut alors être reliée à d'autres phases, de manière à former un onduleur de forte puissance.

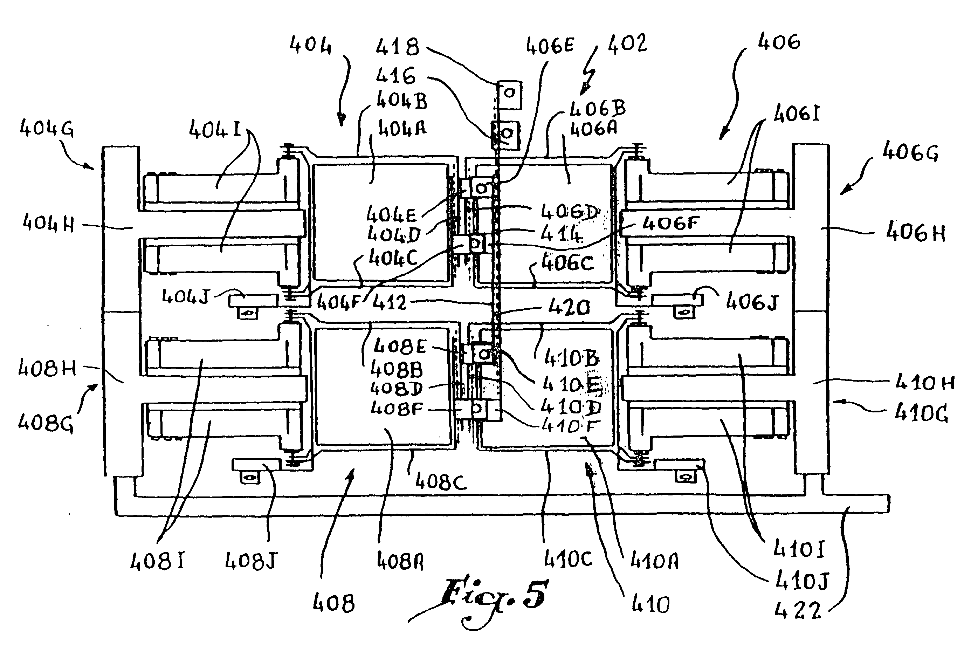

La figure 5 représente un second mode de réalisation d'un ensemble électronique de puissance conforme à l'invention, qui est un onduleur désigné dans son ensemble par la référence 402. Cet onduleur comprend quatre dispositifs électroniques de puissance 404, 406, 408, 410 incluant chacun une batterie de condensateurs conforme à l'invention 404A à 410A.

Chacune de ces batteries comporte deux plaques 404B, 404C à 410B, 410C, qui sont pourvues de rabats respectifs entre lesquels est intercalée une feuille isolante 404D à 410D, de manière à former une barre omnibus.

Chaque plaque est munie de pattes 404E, 404F à 410E, 410F. Les pattes 404E, 406E, 408E, 410E sont reliées les unes aux autres au moyen d'un organe conducteur, tel une tige 412 elle-même connectée à une première borne d'alimentation électrique 416, alors que les pattes 404F, 406F, 408F, 410F sont reliées les unes aux autres au moyen d'une seconde tige 414 elle-même connectée à une seconde borne d'alimentation électrique 418. Entre ces bornes 416 et 418 est intercalée une feuille isolante 420, de manière à former une barre omnibus ou "bus-bar".

Etant donné que les batteries de condensateurs 404A à 410A sont adjacentes, il est possible de réunir leurs pattes 404E, 404F à 410E à 410F au moyen d'un unique couple de tiges conductrices 412, 414.

Chaque batterie de condensateurs 404A à 410A est munie d'un unique sous-ensemble de puissance, à savoir une phase d'onduleur correspondante 404G à 410G. Chacune de ces phases est équipée d'un élément de refroidissement 404H à 410H supportant des modules de puissance 404I à 410I, qui sont connectés à une barre de phase 404J à 410J.

Les éléments de refroidissement 404H à 410H présentent en coupe transversale, une forme de T, de sorte que le premier couple de dispositifs 404, 406 peut être empilé au-dessus du second couple de dispositifs de puissance 408, 410, au niveau des éléments de refroidissement de chacun de ces derniers. De plus, un raccord 422 destiné au transport d'un fluide de refroidissement met en communication les éléments de refroidissement inférieurs 408H et 410H, de sorte que ces derniers peuvent être alimentés au moyen d'une seule entrée de fluide. De plus, chacun de ces éléments de refroidissement est mis en communication fluidique avec l'élément de refroidissement qui est disposé au-dessus de lui. L'onduleur 402 conforme à l'invention possède donc quatre phases, en incluant un hacheur rhéostatique, et se trouve formé en empilant l'un sur l'autre deux couples de dispositifs de puissance.

On peut également prévoir de relier électriquement d'une part les barres de phase 404J et 408J, et d'autre part celles 406J et 410J.

On obtient alors une première phase globale, formée à partir des phases originelles 404G et 408G, ainsi qu'une seconde phase globale à partir des phases originelles 406G et 410G.

Les phases globales possèdent une puissance double et peuvent être reliées à une ou deux phases supplémentaires, afin de constituer un onduleur de forte puissance.

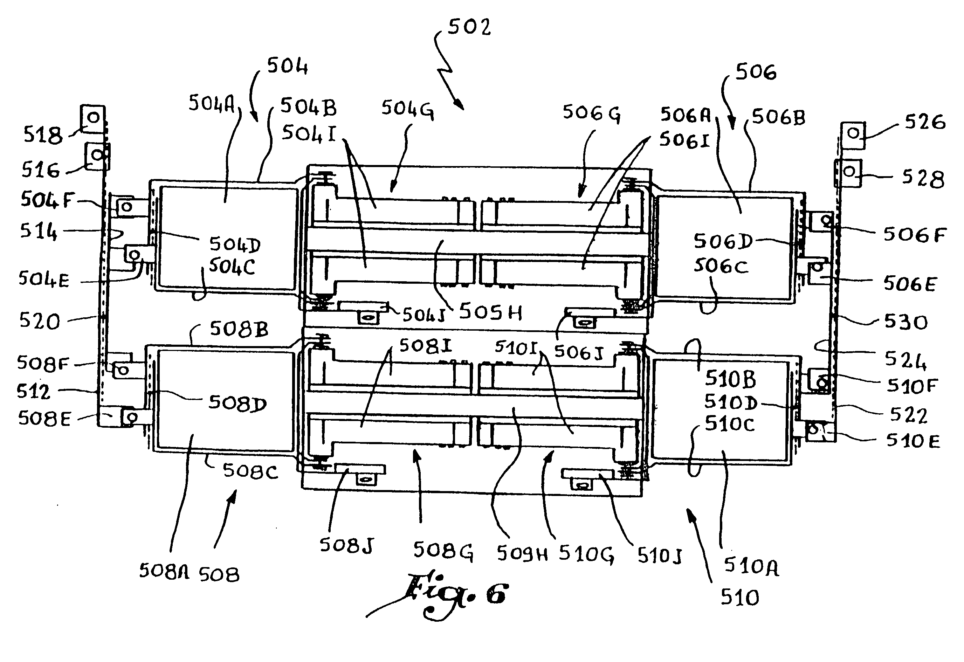

La figure 6 représente un troisième mode de réalisation d'un ensemble de puissance conforme à l'invention, qui est un onduleur désigné dans son ensemble par la référence 502. Ce dernier comprend quatre dispositifs électroniques de puissance 504, 506, 508, 510. Ces derniers incluent chacun un unique sous-ensemble électronique, à savoir une phase d'onduleur correspondante 504G à 510G. Un premier couple de phases 504G, 506G est disposé sensiblement suivant un plan commun et se trouve empilé au-dessus d'un second couple de phases 508G, 510G qui est lui-même disposé selon un autre plan commun.

Chaque couple de phases situé dans un même plan possède un élément de refroidissement commun, à savoir l'élément 505H pour les phases 504G et 506G, ainsi que l'élément 509H pour les phases 508G et 510G. Chaque phase 504G à 510G comprend des modules de puissance 504I à 510I supportés par l'élément de refroidissement correspondant et connectés à une barre de phase 504J à 510J.

Chacune des phases 504G à 510G est reliée à une batterie de condensateurs conforme à l'invention, respectivement 504A à 510A. Chacune de ces batteries est munie d'un couple de plaques 504B, 504C à 510B, 510C munies de rabats entre lesquels est disposée une feuille isolante 504D à 510D de manière à former une barre omnibus. Chacun des rabats formé par les plaques possède des pattes 504E, 504F à 510E, 510F analogues à celles 412F, 416F décrites en référence à la figure 3.

Les pattes 504E et 508E sont reliées électriquement l'une à l'autre par l'intermédiaire d'une première tige conductrice 512, alors que les pattes 504F et 508F sont reliées mutuellement par une troisième tige conductrice 514. Entre chacune de ces tiges conductrices 512, 514, qui sont reliées à des première et seconde bornes 516, 518 d'une alimentation électrique, est intercalée une feuille isolante 520, permettant de former, avec ces tiges conductrices, une barre omnibus.

De manière analogue, les pattes 506E et 510E d'une part, et les pattes 506F et 510F d'autre part part, sont mutuellement connectées au moyen de tiges respectives 522, 524 reliées à des bornes correspondantes 526, 528 d'une alimentation électrique. Une feuille isolante 530 est en outre intercalée entre ces tiges conductrices 526, 528 de manière à former une barre omnibus.

On peut prévoir de relier électriquement d'une part les barres de phase 504J et 506J, et d'autre part les barres de phase 508J et 510J. On obtient ainsi deux phases globales de puissance double, respectivement à partir des phases originelles 504G et 506G d'une part, ainsi qu'à partir des phases 508G et 510G d'autre part. Les deux phases globales peuvent être mises en communication avec une, voire deux phases supplémentaires, de manière à constituer un onduleur de forte puissance.

L'ensemble des exemples décrits et représentés en référence aux figures 4 à 6 fait uniquement allusion à une batterie de condensateurs dont les plaques présentent des rabats entre lesquels sont intercalées des feuilles isolantes visant à former une barre omnibus. Cependant, il est également possible de réaliser des onduleurs analogues à ceux 302, 402 et 502 représentés aux figures 4 à 6, à partir de batteries de condensateurs analogues à celles 4 et 104 représentées en référence aux figures 1 et 2. De plus, dans ces figures 4 à 6, les batteries de condensateurs incluent une unique rangée de plusieurs condensateurs disposés les uns derrière les autres. On peut également prévoir de réaliser une batterie de condensateurs incluant plusieurs de ces rangées, disposées les unes à côté des autres.

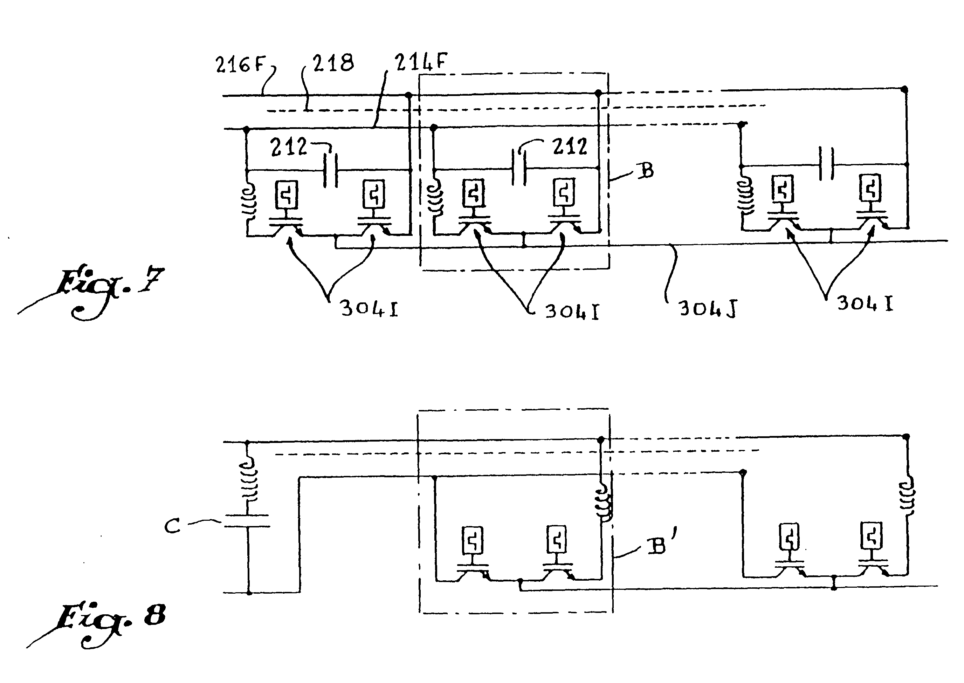

L'invention permet de réaliser les objectifs précédemment mentionnés. En effet, la batterie de condensateurs de l'invention assure au dispositif de puissance qui en est équipé une diminution notable des inductances parasites. A cet égard, il convient de se référer à la figure 7 qui est un schéma électrique de principe illustrant le fonctionnement d'un dispositif de puissance incluant une batterie de condensateurs conforme à l'invention.

Sur cette figure 7 sont repérés les différents éléments constitutifs de la batterie de condensateurs 204 représentés à la figure 3. On retrouve ainsi les plaques 214F, 216F connectées à des bornes non représentées d'alimentation électrique. Ces plaques 214F, 216F sont reliées aux condensateurs 212 qui sont eux-mêmes connectés à des modules de puissance, tels que ceux 304I représentés en référence à la figure 4. Une barre de phase, telle que celle 304J de la figure 4, est reliée électriquement à l'ensemble de ces modules de puissance 304I.

Comme on peut le constater sur cette figure 7, il existe, au sein d'un dispositif électronique de puissance équipé d'une batterie de condensateurs conforme à l'invention, une multiplicité de boucles de commutation B, dont chacune possède une certaine inductance générant des surtensions. Or, conformément à l'invention, ces boucles de commutation sont disposées en parallèle, de sorte que les surtensions ainsi générées n'augmentent que très peu avec le courant. Ceci doit être comparé avec un schéma électrique de l'art antérieur, représenté à la figure 8, dans lequel il existe un unique condensateur C destiné à alimenter l'ensemble des boucles de commutation B'. Du fait de cet agencement, les surtensions inhérentes à un tel dispositif de puissance tendent à croître de manière quasi-linéaire avec le courant.

La conformation du dispositif de puissance de l'invention garantit une réduction notable de la connectique par rapport à ce qui était utilisé dans l'art antérieur, étant donné que l'on relie électriquement l'alimentation aux différents modules de puissance directement par l'intermédiaire de deux plaques conductrices dont est pourvue la batterie de condensateurs.

Le fait d'agencer les deux plaques de connexion de façon co-planaire avec les faces respectives du ou de chaque sous-ensemble électrique assure une compacité remarquable au dispositif de puissance conforme à l'invention.

## Revendications

1. Dispositif électronique de puissance comprenant plusieurs sous-ensembles (6, 8, 10 ; 106, 108) supportant des modules de puissance (6B, 8B, 10B ; 106B, 108B), une batterie de condensateurs (4 ; 104) mise en communication avec une alimentation électrique étant connectée auxdits modules de puissance, ladite batterie comprenant un ou plusieurs condensateurs (12 ; 112 ; 212) disposés en parallèle entre deux plaques de connexion (14, 16 ; 114, 116 ; 214, 216), **caractérisé en ce que** chaque sous-ensemble (6, 8, 10 ; 106, 108) possède une première face (6', 8', 10' ; 106', 108') supportant au moins un premier module de puissance et une seconde face (6", 8", 10" ; 106", 108"), opposée à la première face et supportant au moins un deuxième module de puissance, **en ce qu'**une première plaque (14 ; 114) est connectée à chaque premier module de puissance, alors qu'une seconde plaque (16 ; 116) est connectée à chaque second module de puissance, et **en ce que** d'une part les premières faces (6', 8', 10' ; 106', 108') desdits sous-ensembles (6, 8, 10 ; 106, 108) et d'autre part les secondes faces (6", 8", 10" ; 106", 108") desdits sous-ensembles, opposées auxdites premières faces, sont sensiblement coplanaires, le volume global de ladite batterie de condensateurs (4 ; 104) étant inclus dans le volume défini par lesdites premières (6', 8', 10' ; 106', 108') et secondes faces (6", 8", 10" ; 106", 108").

2. Dispositif selon la revendication 1, **caractérisé en ce que** ladite première plaque (14 ; 114) est sensiblement coplanaire avec la première face (6', 8', 10' ; 106', 108') du ou de chaque sous-ensemble, alors que ladite seconde plaque (16 ; 116) est sensiblement coplanaire avec la seconde face (6", 8", 10" ; 106", 108") du ou de chaque sous-ensemble.

3. Dispositif selon la revendication 1 ou 2, **caractérisé en ce que** ladite batterie de condensateurs (4 ; 104) est placée à peu près au centre dudit dispositif (2), lesdits sous-ensembles (6, 8, 10 ; 106, 108) étant disposés sur au moins une partie de la périphérie de ladite batterie (4, 104).

4. Dispositif selon l'une des revendications 1 à 3, **caractérisé en ce que** lesdites plaques de ladite batterie sont fixées sur une région électriquement isolante d'un élément de refroidissement dudit dispositif électronique.

5. Dispositif selon l'une des revendications 1 à 4, **caractérisé en ce qu'**il forme un onduleur, une première plaque (14 ; 114) de ladite batterie de condensateurs (4 ; 104) reliant électriquement entre elles des premières extrémités desdits condensateurs (12, 112) et une seconde plaques (16, 116) de ladite batterie (4 ; 104) reliant électriquement entre elles des secondes extrémités desdits condensateurs (12 ; 112), lesdites première (14 ; 114) et seconde plaques (16 ; 116) connectant électriquement respectivement des première et seconde bornes d'une alimentation avec des premières (6B, 8B, 10B ; 106B, 108B) et secondes séries de modules de puissance, disposées sur des premières (6', 8', 10' ; 106', 108') et secondes faces (6", 8", 10" ; 106", 108") d'éléments de refroidissement (6A, 8A, 10A; 106A, 108A) dont sont pourvus des sous-ensembles (6, 8, 10 ; 106, 108) dudit onduleur.

6. Dispositif selon la revendication 5, **caractérisé en ce que** lesdites plaques (14, 16) sont sensiblement rectangulaires, trois phases (6, 8, 10) portant chacune une barre de phase (6D, 8D, 10D) étant prévues au voisinage de trois des côtés desdites plaques.

7. Dispositif selon la revendication 5, **caractérisé en ce que** lesdites plaques (114, 116) sont sensiblement rectangulaires, deux bras (106, 108) portant chacun deux barres de phase (106D, 108D) étant prévus au voisinage des grands côtés desdites plaques.

8. Dispositif selon l'une quelconque des revendications 1 à 7, **caractérisé en ce que** lesdites plaques (14, 16 ; 114, 116 ; 214, 216) sont pourvues de languettes (14B ; 114B ; 214B, 216B) dont chacune est destinée à être connectée à un module de puissance correspondant (6B, 8B, 10B; 106B, 108B).

9. Dispositif selon l'une des revendications 1 à 8, **caractérisé en ce que** chaque plaque (14, 16 ; 114, 116 ; 214, 216) comprend une patte (14A, 16A ; 114A, 116A ; 214F, 216F) destinée à être reliée électriquement à une borne correspondante d'une alimentation électrique.

10. Dispositif selon l'une des revendications 1 à 9, **caractérisé en ce que** lesdits condensateurs (12, 112 ; 212) comprennent une ouverture centrale traversante et chaque plaque (14, 16 ; 114, 116 ; 214, 216) est pourvue d'orifices (14C ; 114C ; 214C) ménagés dans le prolongement desdites ouvertures.

11. Dispositif selon l'une des revendications 1 à 10, **caractérisé en ce que** lesdites deux plaques (214, 216) sont pourvues de rabats (214E, 216E) faisant saillie l'un vers l'autre en se recouvrant au moins partiellement, une feuille isolante (218) étant intercalée entre les deux rabats.

12. Ensemble électronique de puissance (302 ; 402 ; 502) comprenant plusieurs dispositifs électroniques de puissance (304, 306, 308 ; 404, 406, 408, 410 ; 504, 506, 508, 510) et des moyens de connexion (312, 314 ; 412, 414 ; 512, 514, 522, 524) desdits dispositifs de puissance entre eux, **caractérisé en ce que** lesdits dispositifs électroniques de puissance (304, 306, 308 ; 404, 406, 408, 410 ; 504, 506, 508, 510) sont conformes à l'une des revendications 1 à 11.

13. Ensemble électronique selon la revendication 12, **caractérisé en ce qu'**il forme un onduleur comportant plusieurs phases, chacune desdites phases comprenant plusieurs desdits dispositifs de puissance mis en parallèle, la puissance de chaque phase étant proportionnelle au nombre de dispositifs de puissance dont elle est pourvue.

14. Ensemble électronique selon la revendication 12, **caractérisé en ce qu'**il forme un onduleur, chaque dispositif de puissance (304, 306, 308 ; 404, 406, 408, 410 ; 504, 506, 508, 510) comprenant un unique sous-ensemble qui est une phase (304G, 306G, 308G ; 404G, 406G, 408G, 410G ; 504G, 506G, 508G, 510G) de l'onduleur.

15. Ensemble électronique selon la revendication 14, **caractérisé en ce que** lesdits dispositifs de puissance (304, 306, 308) sont empilés les uns au-dessus des autres.

16. Ensemble électronique selon la revendication 14, **caractérisé en ce que** des premier (404, 406 ; 504, 506) et second (408, 410 ; 508, 510) couples de dispositifs de puissance sont disposés sensiblement selon des premier et second plans respectifs, lesdits premier et second couples étant empilés l'un sur l'autre.

17. Ensemble électronique selon la revendication 16, **caractérisé en ce que** les batteries de condensateurs (404A, 406A,408A, 410A) des dispositifs de puissance (404, 406, 408, 410) de chaque couple sont adjacentes.

18. Ensemble électronique selon la revendication 16, **caractérisé en ce que** les phases (504G, 506G, 508G, 510G) des dispositifs de puissance (504, 506, 508, 510) de chaque couple sont adjacentes.

19. Ensemble électronique selon la revendication 18, **caractérisé en ce que** lesdites phases adjacentes (504G, 506G, 508G, 510G) possèdent un élément de refroidissement commun (505H, 509H).

## Claims

1. Electronic power device comprising a plurality of sub-assemblies (6, 8, 10; 106, 108) which support power modules (6B, 8B, 10B; 106B, 108B), a set of capacitors (4; 104) which are put into communication with an electrical supply being connected to the said power modules, the said set comprising one or more capacitors (12; 112, 212) which are disposed in parallel between two connection plates (14, 16; 114, 116; 214, 216), **characterised in that** each sub-assembly (6, 8, 10; 106, 108) has a first surface (6' 8', 10'; 106', 108') which supports at least one first power module and a second surface (6", 8", 10"; 106", 108") which is opposite the first surface and supports at least one second power module, **in that** a first plate (14; 114) is connected to each first power module, whereas a second plate (16; 116) is connected to each second power module, and **in that**, firstly, the first surfaces (6', 8', 10'; 106', 108') of the said sub-assemblies (6, 8, 10; 106, 108), and secondly the second surfaces (6", 8", 10"; 106", 108") of the said sub-assemblies, which are opposite the said first surfaces, are substantially co-planar, the global volume of the said set of capacitors (4; 104) being included in the volume defined by the said first (6', 8', 10'; 106', 108') and second surfaces (6", 8", 10"; 106", 108").

2. Device according to claim 1, **characterised in that** the said first plate (14; 114) is substantially co-planar with the first surface (6', 8', 10'; 106', 108') of the or each sub-assembly, whereas the said second plate (16; 116) is substantially coplanar with the second surface (6", 8", 10"; 106", 108") of the or each sub-assembly.

3. Device according to claim 1 or 2, **characterised in that** the said set of capacitors (4; 104) is placed approximately in the centre of the said device (2), the said sub-assemblies (6, 8, 10; 106, 108) being disposed on at least part of the periphery of the said set (4, 104).

4. Device according to one of claims 1 to 3, **characterised in that** the said plates of the said set are secured on an electrically insulating region of a cooling element of the said electronic device.

5. Device according to one of claims 1 to 4, **characterised in that** it forms an inverter, a first plate (14; 114) of the said set of capacitors (4; 104) connecting electrically to one another first ends of the said capacitors (12, 112) and a second plate (16, 116) of the said set (4; 104) connecting electrically to one another second ends of the said capacitors (12; 112), the said first (14; 114) and second plates (16; 116) connecting electrically respectively first and second terminals of a supply to first (6B, 8B, 10B; 106B, 108B) and second series of power modules which are disposed on first (6', 8', 10'; 106' 108') and second surfaces (6", 8", 10"; 106", 108") of cooling elements (6A, 8A, 10A; 106A, 108A) with which sub-assemblies (6, 8, 10; 106, 108) of the said inverter are provided.

6. Device according to claim 5, **characterised in that** the said plates (14, 16) are substantially rectangular, three phases (6, 8, 10), each of which supports a phase bar (6D, 8D, 10D), being provided in the vicinity of three of the sides of the said plates.

7. Device according to claim 5, **characterised in that** the said plates (114, 116) are substantially rectangular, two arms (106, 108), each of which supports two phase bars (106D, 108D), being provided in the vicinity of the large sides of the said plates.

8. Device according to any one of claims 1 to 7, **characterised in that** the said plates (14, 16; 114, 116; 214, 216) are provided with tongues (14B; 114B; 214B, 216B), each of which is designed to be connected to a corresponding power module (6B, 8B, 10B; 106B, 108B).

9. Device according to one of claims 1 to 8, **characterised in that** each plate (14, 16; 114, 116; 214, 216) comprises a lug (14A, 16A; 114A, 116A; 214F, 216F) which is designed to be connected electrically to a corresponding terminal of an electrical supply.

10. Device according to one of claims 1 to 9, **characterised in that** the said capacitors (12, 112; 212) comprise a central through opening and each plate (14, 16; 114, 116; 214, 216) is provided with apertures (14C; 114C; 214C) which are provided in the extension of the said openings.

11. Device according to one of claims 1 to 10, **characterised in that** the said two plates (214, 216) are provided with flaps (214E, 216E) which project towards one another whilst overlapping at least partially, an insulating sheet (218) being interposed between the two flaps.

12. Electronic power assembly (302; 402; 502) comprising a plurality of electronic power devices (304, 306, 308; 404, 406, 408, 410; 504, 506, 508, 510) and means (312, 314; 412, 414; 512, 514, 522, 524) for connection of the said power devices to one another, **characterised in that** the said electronic power devices (304, 306, 308; 404, 406, 408, 410; 504, 506, 508, 510) are in accordance with one of claims 1 to 11.

13. Electronic assembly according to claim 12, **characterised in that** it forms an inverter comprising a plurality of phases, each of the said phases comprising a plurality of the said power devices put into parallel, the power of each phase being proportional to the number of power devices with which it is provided.

14. Electronic assembly according to claim 12, **characterised in that** it forms an inverter, each power device (304, 306, 308; 404, 406, 408, 410; 504, 506, 508, 510) comprising a single sub-assembly which is a phase (304G, 306G, 308G; 404G, 406G, 408G, 410G; 504G, 506G, 508G, 510G) of the inverter.

15. Electronic assembly according to claim 14, **characterised in that** the said power devices (304, 306, 308) are stacked on one another.

16. Electronic assembly according to claim 14, **characterised in that** first (404, 406; 504, 506) and second (408, 410; 508, 510) pairs of power devices are disposed substantially according to first and second respective planes, the said first and second pairs being stacked on one another.

17. Electronic assembly according to claim 16, **characterised in that** the sets of capacitors (404A, 406A, 408A, 410A) of the power devices (404, 406, 408, 410) of each pair are adjacent.

18. Electronic assembly according to claim 16, **characterised in that** the phases (504G, 506G, 508G, 510G) of the power devices (504, 506, 508, 510) of each pair are adjacent.

19. Electronic assembly according to claim 18, **characterised in that** the said adjacent phases (504G, 506G, 508G, 510G) have a common cooling element (505H, 509H).

## Patentansprüche

1. Elektronische Leistungsvorrichtung mit mehreren Teileinheiten (6, 8, 10; 106, 108), die Leistungsmodule (6B, 8B, 10B; 106B, 108B) haltern, wobei ein Kondensatorenblock (4; 104), der mit einer Stromversorgung in Verbindung steht, auf die Leistungsmodule aufgeschaltet ist, wobei der Block einen oder mehrere Kondensator/en (12; 112, 212) umfasst, die parallel zwischen zwei Anschlussplatten (14, 16; 114, 116; 214; 216) vorgesehen sind, **dadurch gekennzeichnet, dass** jede Teileinheit (6, 8, 10; 106, 108) eine erste Seite (6', 8', 10'; 106', 108'), die mindestens ein erstes Leistungsmodul haltert, und eine zweite Seite (6", 8", 10"; 106", 108") besitzt, die der ersten Seite entgegengesetzt ist und mindestens ein zweites Leistungsmodul haltert, dass eine erste Platte (14; 114) an jedes erste Leistungsmodul angeschlossen ist, während eine zweite Platte (16; 116) an jedes zweite Leistungsmodul angeschlossen ist, und dass einerseits die ersten Seiten (6', 8', 10'; 106', 108') der Teileinheiten (6, 8, 10; 106, 108) und andererseits die den ersten Seiten entgegengesetzten zweiten Seiten (6", 8", 10"; 106", 108") der Teileinheiten im Wesentlichen koplanar sind, wobei der Gesamtrauminhalt des Kondensatorenblocks (4; 104) in dem Rauminhalt enthalten ist, der durch die ersten Seiten (6', 8', 10'; 106', 108') und zweiten Seiten (6", 8", 10"; 106", 108") gebildet ist.

2. Vorrichtung nach Anspruch 1, **dadurch gekennzeichnet, dass** die erste Platte (14; 114) im Wesentlichen koplanar mit der ersten Seite (6', 8', 10'; 106', 108') der oder jeder Teileinheit ist, während die zweite Platte (16; 116) im Wesentlichen koplanar mit der zweiten Seite (6", 8", 10"; 106", 108") der oder jeder Teileinheit ist.

3. Vorrichtung nach Anspruch 1 oder 2, **dadurch gekennzeichnet, dass** der Kondensatorenblock (4; 104) ungefähr in der Mitte der Vorrichtung (2) sitzt, wobei die Teileinheiten (6, 8, 10; 106, 108) auf zumindest einem Teil des Umfangs des Blocks (4, 104) angeordnet sind.

4. Vorrichtung nach einem der Ansprüche 1 bis 3, **dadurch gekennzeichnet, dass** die Platten des Blocks auf einem elektrisch isolierenden Bereich eines Kühlelements der elektronischen Vorrichtung befestigt sind.

5. Vorrichtung nach einem der Ansprüche 1 bis 4, **dadurch gekennzeichnet, dass** sie einen Wechselrichter bildet, wobei eine erste Platte (14; 114) des Kondensatorenblocks (4; 104) eine elektrische Verbindung der ersten Enden der Kondensatoren (12, 112) untereinander herstellt, und eine zweite Platte (16, 116) des Blocks (4; 104) eine elektrische Verbindung der zweiten Enden der Kondensatoren (12; 112) untereinander herstellt, wobei die ersten (14; 114) und zweiten Platten (16; 116) jeweils erste und zweite Klemmen einer Versorgung mit ersten (6B, 8B, 10B; 106B, 108B) und zweiten Reihen von Leistungsmodulen elektrisch zusammenschalten, die auf den ersten (6', 8', 10'; 106', 108') und zweiten Seiten (6", 8", 10"; 106", 108") von Kühlelementen (6A, 8A, 10A; 106A, 108A) angeordnet sind, mit denen die Teileinheiten (6, 8, 10; 106, 108) des Wechselrichters versehen sind.

6. Vorrichtung nach Anspruch 5, **dadurch gekennzeichnet, dass** die Platten (14, 16) im Wesentlichen rechteckig sind, wobei drei Phasen (6, 8, 10), die jeweils eine Phasenschiene (6D, 8D, 10D) tragen, in der Nähe von drei Seiten der Platten vorgesehen sind.

7. Vorrichtung nach Anspruch 5, **dadurch gekennzeichnet, dass** die Platten (114, 116) im Wesentlichen rechteckig sind, wobei zwei Arme (106, 108), die jeweils zwei Phasenschienen (106D, 108D) tragen, in der Nähe der langen Seiten der Platten vorgesehen sind.

8. Vorrichtung nach einem der Ansprüche 1 bis 7, **dadurch gekennzeichnet, dass** die Platten (14, 16; 114, 116; 214, 216) mit Flachsteckern (14B; 114B; 214B, 216B) versehen sind, wovon jeder dazu bestimmt ist, in ein entsprechendes Leistungsmodul (6B, 8B, 10B; 106B, 108B) eingesteckt zu werden.

9. Vorrichtung nach einem der Ansprüche 1 bis 8, **dadurch gekennzeichnet, dass** jede Platte (14, 16; 114, 116; 214, 216) eine Lasche (14A, 16A; 114A, 116A, 214F, 216F) umfasst, die dazu bestimmt ist, elektrisch mit einer entsprechenden Klemme einer Stromversorgung verbunden zu werden.

10. Vorrichtung nach einem der Ansprüche 1 bis 9, **dadurch gekennzeichnet, dass** die Kondensatoren (12, 112; 212) einen zentralen Durchgangseinlass umfassen und jede Platte (14, 16; 114, 116; 214, 216) mit Öffnungen (14C; 114C; 214C) versehen ist, die in der Verlängerung der Einlässe ausgebildet sind.

11. Vorrichtung nach einem der Ansprüche 1 bis 10, **dadurch gekennzeichnet, dass** die beiden Platten (214, 216) mit Laschen (214E, 216E) versehen sind, die aufeinander zu vorspringen, indem sie sich zumindest teilweise überdecken, wobei eine Isolierfolie (218) zwischen die beiden Laschen eingelegt ist.

12. Elektronische Leistungseinheit (302; 402; 502) mit mehreren elektronischen Leistungsvorrichtungen (304, 306, 308; 404, 406, 408, 410; 504, 506, 508, 510) und Einrichtungen zum Anschließen (312, 314; 412, 414: 512, 514, 522, 524) der Leistungsvorrichtungen untereinander, **dadurch gekennzeichnet, dass** die elektronischen Leistungsvorrichtungen (304, 306, 308; 404, 406, 408, 410; 504, 506, 508, 510) einem der Ansprüche 1 bis 11 entsprechen.

13. Elektronische Einheit nach Anspruch 12, **dadurch gekennzeichnet, dass** sie einen Wechselrichter mit mehreren Phasen bildet, wobei jede der Phasen mehrere der Leistungsvorrichtungen parallel angeordnet umfasst, wobei die Leistung jeder Phase proportional zur Anzahl an Leistungsvorrichtungen ist, mit denen sie versehen ist.

14. Elektronische Einheit nach Anspruch 12, **dadurch gekennzeichnet, dass** sie einen Wechselrichter bildet, wobei jede Leistungsvorrichtung (304, 306, 308; 404, 406, 408, 410; 504, 506, 508, 510) eine einzige Teileinheit umfasst, die eine Phase (304G, 306G, 308G; 404G, 406G, 408G, 410G; 504G, 506G, 508G, 510G) des Wechselrichters ist.

15. Elektronische Einheit nach Anspruch 14, **dadurch gekennzeichnet, dass** die Leistungsvorrichtungen (304, 306, 308) übereinandergestapelt sind.

16. Elektronische Einheit nach Anspruch 14, **dadurch gekennzeichnet, dass** erste (404, 406; 504, 506) und zweite (408; 410; 508, 510) Paare von Leistungsvorrichtungen im Wesentlichen gemäß jeweils erster und zweiter Ebenen angeordnet sind, wobei die ersten und zweiten Paare übereinandergestapelt sind.

17. Elektronische Einheit nach Anspruch 16, **dadurch gekennzeichnet, dass** die Kondensatorenblöcke (404A, 406A, 408A, 410A) der Leistungsvorrichtungen (404, 406, 408, 410) jedes Paars aneinander angrenzen.

18. Elektronische Einheit nach Anspruch 16, **dadurch gekennzeichnet, dass** die Phasen (504G, 506G, 508G, 510G) der Leistungsvorrichtungen (504, 506, 508, 510) jedes Paars aneinander angrenzen.

19. Elektronische Einheit nach Anspruch 18, **dadurch gekennzeichnet, dass** die aneinander angrenzenden Phasen (504G, 506G, 508G, 510G) ein gemeinsames Kühlelement (505H, 509H) besitzen.
